# EUROPEAN PATENT APPLICATION

(11) **EP 3 984 708 A1**
(43) Date of publication of application: **20.04.2022**
(21) Application number: 21199997.4
(22) Date of filing: 29.09.2021
(51) Int. Cl.: B25J 9/16

(54) **TECHNIQUES FOR ROBOT CONTROL BASED ON GENERATED ROBOT SIMULATIONS**

(30) Priority: 13.10.2020 US 202063091082 P; 02.09.2021 US 202117465735
(71) Applicant: Autodesk, Inc., San Rafael, CA 94903 (US)
(72) Inventor: GILLET, Matthieu, San Rafael (US); KALAY, Fikret, San Rafael (US); MESSMER, Franck, San Rafael (US)
(74) Representative: D Young & Co LLP

(57) **Abstract**

Techniques are disclosed for controlling robots based on generated robot simulations. A robot simulation application is configured to receive a robot definition specifying the geometry of a robot, a list of points defining a toolpath that a head of the robot follows during an operation, and a number of simulations of the robot performing the operation. The simulation application then performs the number of simulations, displays results of those simulations, and generates code for controlling a physical robot based on a user selection of one of those simulations. During each simulation, if a robotic problem, such as an axis limit or a singularity problem, is encountered, then the simulation application attempts to resolve the problem by rotating the robot head in both directions about a tool axis and determining a smallest angle of rotation in either direction that resolves the robotic problem, if any.

## Description

### CROSS-REFERENCE TO RELATED APPLICATIONS

This application claims priority benefit of the United States Provisional Patent Application titled, "TECHNIQUES FOR GENERATIVE ROBOT SIMULATION," filed on October 13, 2020 and having Serial No. 63/091,082.

### BACKGROUND

### Field of the Disclosure

Embodiments of the present disclosure relate generally to computer science and robotics and, more specifically, to techniques for robot control based on generated robot simulations.

### Description of the Related Art

Robots are widely used in manufacturing and construction by companies operating in a multitude of various industries. Oftentimes, operations that are to be performed by a robot are first simulated on a computer to confirm that the operations can be performed without encountering any problems. One example of a relatively common problem is when an operation to be performed by a robot causes the robot to exceed an axis limit that defines a range of motion of the robot. Another example of a relatively common problem is when an operation to be performed by a robot causes a singularity, which is a collinear alignment of two or more axes of the robot that can result in unpredictable motions and velocities of the robot, to be created.

Conventional software for simulating robotic operations usually requires a user to manually specify the various parameters, such as the orientation of the head of the robot, that are to be used in a simulation. Based on those parameters, conventional software generates the simulation of the relevant robotic operation and displays the results of the simulation to the user.

One drawback of conventional simulation software is that conventional software typically does not incorporate functionality to automatically simulate and analyze the effects of different parameter values on a robotic operation. Instead, multiple simulations of the relevant robotic operation need to be generated in an iterative manner using parameter values that are chosen by a user through a trial-and-error process.

Another drawback of conventional simulation software is that conventional software does not correct any of the problems, such as exceeding an axis limit or creating a singularity, that can occur during a simulation. Instead, a user needs to manually analyze the simulation to identify any such problems and then select different parameter values for use in a subsequent simulation. The user has to repeat this process until the user can identify the parameter values that resolve the problem.

A further drawback of conventional simulation software is that conventional software does not account for the capabilities of a physical robot, such as the maximum speeds and accelerations achievable by axes of the robot. As a result, simulations of robotic operations can be unrealistic when, for example, a simulation requires robot axes to move at speeds or with accelerations that the robot is not capable of achieving.

In sum, the process of simulating robotic operations using conventional simulation software typically requires extensive knowledge of robotics and how conventional simulation software works. In addition, the overall process of running numerous simulations of a robotic operation using manually-selected parameter values can be quite tedious and time consuming.

As the foregoing illustrates, what is needed in the art are more effective techniques for simulating robotic operations.

### SUMMARY

One embodiment of the present disclosure sets forth a computer-implemented method for controlling a robot. The method includes performing a plurality of simulations of the robot performing at least one operation. Each simulation included in the plurality of simulations is associated with a value of a parameter that is different than values of the parameter associated with each other simulation included in the plurality of simulations. The method further includes, subsequent to performing the plurality of simulations: displaying one or more results of one or more of the plurality of simulations to a user; receiving, from the user, a selection of a first simulation included in the one or more simulations; and generating computer code for controlling the robot based on the first simulation.

Other embodiments of the present disclosure include, without limitation, a computer-readable medium including instructions for performing one or more aspects of the disclosed techniques as well as a computing device for performing one or more aspects of the disclosed techniques.

At least one technical advantage of the disclosed techniques relative to the prior art is that the disclosed techniques, when incorporated into simulation software, enable the simulation software to generate and analyze multiple simulations of a robotic operation, without requiring a user to manually select parameter values for the different simulations using a trial-and-error process. In addition, the disclosed techniques enable the simulation software to automatically resolve problems, such as exceeding an axis limit or creating a singularity, that occur during the different simulations of the robotic operation. Further, the disclosed techniques account for the capabilities of the physical robot, such as the maximum speeds and accelerations that robot axes can achieve. Thus, with the disclosed techniques, the likelihood of optimizing robotic operations through simulation is increased relative to prior art approaches. These technical advantages represent tangible and meaningful technological improvements over conventional software and approaches for simulating robotic operations.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 is a conceptual illustration of a system configured to implement one or more aspects of the various embodiments;
Figure 2 is a more detailed illustration of the simulation application of Figure 1, according to various embodiments;
Figures 3A-3B illustrate an exemplar solution to an axis limit problem encountered when simulating a robotic operation, according to various embodiments;
Figure 4 illustrates an exemplar user interface for the simulation application of Figure 1, according to various embodiments;
Figure 5 illustrates exemplar simulation results displayed via the user interface of Figure 4, according to various embodiments;
Figure 6 is a flow diagram of method steps for generating robot code based on one or more simulations of a robotic operation, according to various embodiments; and
Figure 7 is a flow diagram of method steps for changing the angle of a robot head during the simulation of a robotic operation, according to various embodiments.

### DETAILED DESCRIPTION

In the following description, numerous specific details are set forth to provide a more thorough understanding of the present disclosure. However, it will be apparent to one of skilled in the art that the present disclosure may be practiced without one or more of these specific details.

### System Overview

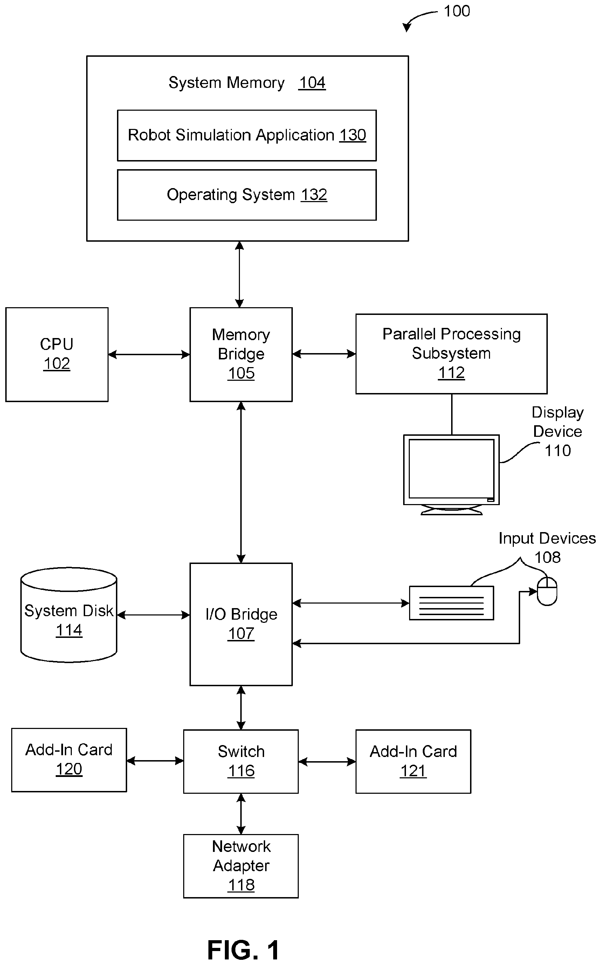

Figure 1 is a conceptual illustration of a system 100 configured to implement one or more aspects of the various embodiments. As shown, the system 100 includes a central processing unit (CPU) 102 and a system memory 104 communicating via a bus path that may include a memory bridge 105. The CPU 102 includes one or more processing cores, and, in operation, the CPU 102 is the master processor of the system 100, controlling and coordinating operations of other system components. The system memory 104 stores software applications and data for use by the CPU 102. The CPU 102 runs software applications and optionally an operating system.

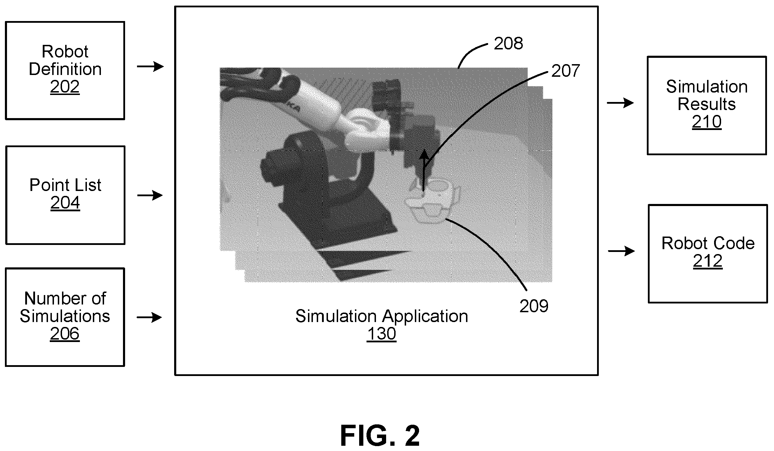

As shown, the system memory 104 stores a robot simulation application 130 (also referred to herein as "simulation application 130") and an operating system 132 on which the simulation application 130 runs. The operating system 132 may be, e.g., Linux^{®} or Microsoft Windows^{®}. The simulation application 130 is configured to receive a robot definition specifying the geometry of a robot, a list of points defining a toolpath that a head of the robot follows during an operation, and a number of simulations of the robot performing the operation. Given the robot definition, the list of points, and the number of simulations, the simulation application 130 performs the number of simulations, displays results of those simulations, and generates robot code for controlling a physical robot based on a user selection of one of those simulations, as described in greater detail below in conjunction with Figures 2-7.

The memory bridge 105, which may be, e.g., a Northbridge chip, is connected via a bus or other communication path (e.g., a HyperTransport link) to an I/O (input/output) bridge 107. The I/O bridge 107, which may be, e.g., a Southbridge chip, receives user input from one or more user input devices 108 (e.g., keyboard, mouse, joystick, digitizer tablets, touch pads, touch screens, still or video cameras, motion sensors, and/or microphones) and forwards the input to the CPU 102 via the memory bridge 105.

A display processor 112 is coupled to the memory bridge 105 via a bus or other communication path (e.g., a PCI Express, Accelerated Graphics Port, or HyperTransport link); in some embodiments, the display processor 112 is a graphics subsystem that includes at least one graphics processing unit (GPU) and graphics memory. Graphics memory includes a display memory (e.g., a frame buffer) used for storing pixel data for each pixel of an output image. Graphics memory can be integrated in the same device as the GPU, connected as a separate device with the GPU, and/or implemented within system memory 104.

The display processor 112 periodically delivers pixels to a display device 110 (e.g., a screen or conventional CRT, plasma, OLED, SED or LCD based monitor or television). Additionally, the display processor 112 may output pixels to film recorders adapted to reproduce computer generated images on photographic film. The display processor 112 can provide the display device 110 with an analog or digital signal. In various embodiments, one or more of the various graphical user interfaces set forth in Appendices A-J, attached hereto, are displayed to one or more users via display device 110, and the one or more users can input data into and receive visual output from those various graphical user interfaces.

A system disk 114 is also connected to the I/O bridge 107 and may be configured to store content and applications and data for use by the CPU 102 and the display processor 112. The system disk 114 provides non-volatile storage for applications and data and may include fixed or removable hard disk drives, flash memory devices, and CD-ROM, DVD-ROM, Blu-ray, HD-DVD, or other magnetic, optical, or solid state storage devices.

A switch 116 provides connections between the I/O bridge 107 and other components such as a network adapter 118 and various add-in cards 120 and 121. The network adapter 118 allows system 100 to communicate with other systems via an electronic communications network, and may include wired or wireless communication over local area networks and wide area networks such as the Internet.

Other components (not shown), including USB or other port connections, film recording devices, and the like, may also be connected to the I/O bridge 107. For example, an audio processor may be used to generate analog or digital audio output from instructions and/or data provided by the CPU 102, the system memory 104, or the system disk 114. Communication paths interconnecting the various components in Figure 1 may be implemented using any suitable protocols, such as PCI (Peripheral Component Interconnect), PCI Express (PCI-E), AGP (Accelerated Graphics Port), HyperTransport, or any other bus or point-to-point communication protocol(s), and connections between different devices may use different protocols, as is known in the art.

In some embodiments, the display processor 112 incorporates circuitry optimized for graphics and video processing, including, for example, video output circuitry, and constitutes a graphics processing unit (GPU). In some other embodiments, the display processor 112 incorporates circuitry optimized for general purpose processing. In yet other embodiments, the display processor 112 may be integrated with one or more other system elements, such as the memory bridge 105, the CPU 102, and the I/O bridge 107 to form a system on chip (SoC). In still further embodiments, display processor 112 is omitted and software executed by the CPU 102 performs the functions of the display processor 112.

Pixel data can be provided to the display processor 112 directly from the CPU 102. In some embodiments of the present invention, instructions and/or data representing a scene are provided to a render farm or a set of server computers, each similar to the system 100, via the network adapter 118 or the system disk 114. The render farm generates one or more rendered images of the scene using the provided instructions and/or data. These rendered images may be stored on computer-readable media in a digital format and optionally returned to the system 100 for display. Similarly, stereo image pairs processed by the display processor 112 may be output to other systems for display, stored in the system disk 114, or stored on computer-readable media in a digital format.

Alternatively, the CPU 102 provides the display processor 112 with data and/or instructions defining the desired output images, from which the display processor 112 generates the pixel data of one or more output images, including characterizing and/or adjusting the offset between stereo image pairs. The data and/or instructions defining the desired output images can be stored in the system memory 104 or graphics memory within the display processor 112. In some embodiments, the display processor 112 includes 3D rendering capabilities for generating pixel data for output images from instructions and data defining the geometry, lighting shading, texturing, motion, and/or camera parameters for a scene. The display processor 112 can further include one or more programmable execution units capable of executing shader programs, tone mapping programs, and the like.

Further, in other embodiments, the CPU 102 or the display processor 112 may be replaced with or supplemented by any technically feasible form of processing device configured process data and execute program code. Such a processing device could be, for example, a central processing unit (CPU), a graphics processing unit (GPU), an application-specific integrated circuit (ASIC), a field-programmable gate array (FPGA), and so forth. In various embodiments any of the operations and/or functions described herein can be performed by the CPU 102, the display processor 112, or one or more other processing devices or any combination of these different processors.

The CPU 102, render farm, and/or the display processor 112 can employ any surface or volume rendering technique known in the art to create one or more rendered images from the provided data and instructions, including rasterization, scanline rendering REYES or micropolygon rendering, ray casting, ray tracing, image-based rendering techniques, and/or combinations of these and any other rendering or image processing techniques known in the art.

In other contemplated embodiments, the system 100 may be a robot or robotic device and may include the CPU 102 and/or other processing units or devices and the system memory 104. In such embodiments, the system 100 may or may not include other elements shown in Figure 1. The system memory 104 and/or other memory units or devices in the system 100 may include instructions that, when executed, cause the robot or robotic device represented by the system 100 to perform one or more operations, steps, tasks, or the like.

It will be appreciated that the system shown herein is illustrative and that variations and modifications are possible. The connection topology, including the number and arrangement of bridges, may be modified as desired. For instance, in some embodiments, the system memory 104 is connected to the CPU 102 directly rather than through a bridge, and other devices communicate with the system memory 104 via the memory bridge 105 and the CPU 102. In other alternative topologies the display processor 112 is connected to the I/O bridge 107 or directly to the CPU 102, rather than to the memory bridge 105. In still other embodiments, the /O bridge 107 and the memory bridge 105 might be integrated into a single chip. The particular components shown herein are optional; for instance, any number of add-in cards or peripheral devices might be supported. In some embodiments, the switch 116 is eliminated, and the network adapter 118 and add-in cards 120, 121 connect directly to the I/O bridge 107.

### Generative Robot Simulation for Controlling Robots

Figure 2 is a more detailed illustration of the simulation application 130 of Figure 1, according to various embodiments. As shown, the simulation application 130 receives as inputs a robot definition 202 (in, e.g., a text file) specifying the geometry of a robot, a list of points 204 (in, e.g., an ISO file) defining a toolpath 209 that a head of the robot follows during an operation, and a number of simulations 206 of the robot performing an operation. Any technically feasible type of operation can be simulated, such as a milling operation, a painting operation, a gluing operation, a finishing operation, another manufacturing process, and/or any other robotic process.

Given the robot definition 202, the list of points 204, and the number of simulations 206, the simulation application 130 performs the number of simulations, shown as simulations 208 (collectively referred to herein as simulations 208 and individually referred to as a simulation 208). In some embodiments, the simulations 208 are performed with different starting values of a parameter defining the angle of an orientation of a head of the robot relative to a base orientation. The base orientation can be defined by a vector from the root of the robot (also sometimes referred to as the "robot base"), to a first point coordinate. The base orientation vector is set as a "0° angle," and other angles in two directions that the head of the robot can turn are calculated with respect to the initial orientation of the base orientation vector.

In some embodiments, a range of allowable angles for the orientation of the robot head that are between axis limits can be divided by the number of simulations to determine an angle by which to increment the starting value for each simulation. For example, if the robot head is able to move between -120 and 120 degrees, and 25 simulations are to be performed, then the different starting values for the head orientation parameter could be -120, -110, -100, ... , 100, 110, 120. In some other embodiments, the angle by which the starting value is incremented for each of the simulations can be a predefined angle.

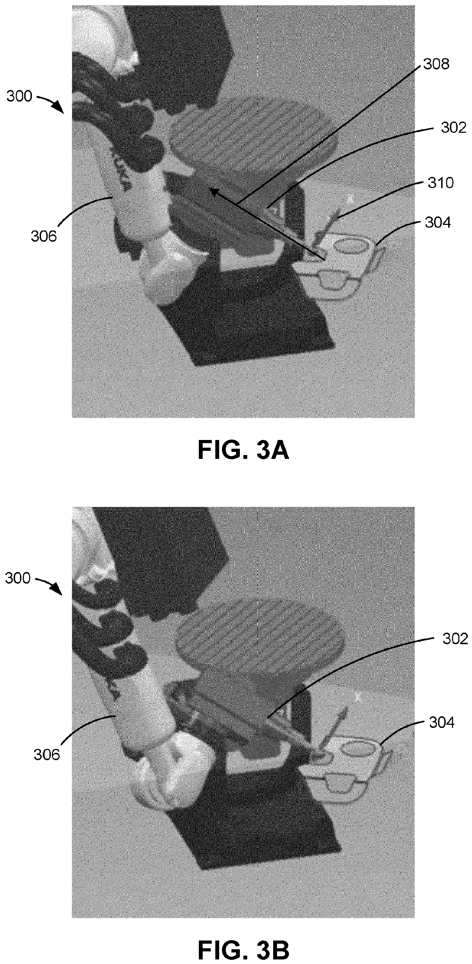

During each simulation 208, the robot defined by the robot definition 202 follows a toolpath 209 specified by the list of points 204, and an orientation of the robot head, which can be represented by a tool orientation vector (e.g., tool orientation vector 310 in Figure 3A, described in greater detail below), begins with one of the different starting values, described above. In some embodiments, the list of points 204 includes (x, y, z) coordinates defining the toolpath 209 followed by the robot head and (i, j, k) coordinates defining an axis 207 of a tool of the robot, also referred to as the "tool axis." For example, the list of points 204 could be specified in an ISO file. Although described herein primarily with respect to a single list of points (e.g., the list of points 204), in some embodiments, simulations can also be performed based on multiple lists of points. For example, multiple ISO files that include lists of points could be used to generate successive simulations. As another example, the lists of points in multiple ISO files could be concatenated together and used to generate a simulation.

One or more robotic problems may be encountered during each simulation, such as exceeding an axis limit that defines a range of motion of the robot or creating a singularity. During a simulation, the simulation application 130 evaluates the robot at each point in the list of points 204 to determine whether any robotic problems have been encountered. In some embodiments, the simulation application 130 employs an inverse kinematics (IK) solver to compute joint positions of the robot given the head position at each point, and the simulation application 130 then identifies whether an axis limit that defines a range of motion of the robot is exceeded and/or a singularity involving a collinear alignment of two or more robot axes is created given the joint positions of the robot. For example, the simulation application 130 could compare the joint positions of the robot with the robot definition 202 to determine if various axes are within corresponding axis limits or not. As another example, the simulation application 130 could check whether any joints are aligned with each other to determine whether a singularity has been created.

Although described herein primarily with respect to axis limit and singularity problems as reference examples, in some embodiments, the simulation application 130 can determine and resolve any technically feasible robotic problems. For example, in some embodiments, the simulation application 130 can detect and attempt to resolve collisions of different parts of the robot and/or collisions of the robot with other objects.

If a robotic problem is encountered at any point in the list of points 204, then the simulation application 130 attempts to resolve the robotic problem by rotating the robot head about the tool axis 207. In some embodiments, the simulation application 130 rotates the robot head in both directions about the tool axis 207 and determines a smallest angle of rotation in either direction that resolves the robotic problem, if any. Using the smallest angle of rotation allows the robot motion to be smoother than if a larger angle of rotation were used. In some embodiments, a maximum angle of rotation to resolve robotic problems can be specified by a user, set by default, or automatically determined. In such cases, the simulation application 130 rotates the robot head in both directions about the tool axis 207 until the robotic problem is resolved or the maximum angle of rotation is reached. Then, the simulation application 130 determines the rotation in either direction having the smallest angle that resolves the robotic problem, if any. If no such smallest angle exists (i.e., if the maximum angle of rotation is reached in both directions), then the simulation application 130 can display to a user that the simulation of the operation is invalid because of the robotic problem. On the other hand, if a smallest angle is identified that resolves the robotic problem, then the simulation application 130 rotates the robot head by the smallest angle about the tool axis 207 and evaluates the robot at a next point in the list of points 204.

Although described herein primarily with respect to rotating the robot head about the tool axis 207, in some embodiments, other movements of a robot and/or other object(s) can be determined that resolve robotic problems. For example, a rotary table that is external to the robot could be rotated about an axis by a smallest angle necessary to resolve a robotic problem. As another example, if the robot is mounted on a rail, then the robot could be moved by a smallest amount along the rail that resolves a robotic problem.

Figures 3A-3B illustrate an exemplar solution to an axis limit problem encountered when simulating a robotic operation, according to various embodiments. As shown in Figure 3A, due to an axis limit being exceeded, a head 302 of a robot 300 has collided with an arm 306 of the robot 300. Upon identifying the axis limit problem, the simulation application 130 rotates the robot head 302, whose orientation is represented by a tool orientation vector 310, in both directions about a tool axis 308 and determines a smallest angle of rotation in either direction that resolves the axis limit problem. The tool orientation vector 310 is shown as an X axis, and the tool axis 308 is a Z axis that is orthogonal to the X axis.

As shown in Figure 3B, when the robot head 302 is rotated by a particular angle, then the axis limit problem no longer exists. The particular angle is the smallest angle that the robot head 302 can be rotated in either direction about the tool axis 308 to resolve the axis limit problem, described above in conjunction with Figure 3A. After the axis limit problem is resolved, the head 302 of the robot 300 no longer collides with the arm 306 of the robot 300.

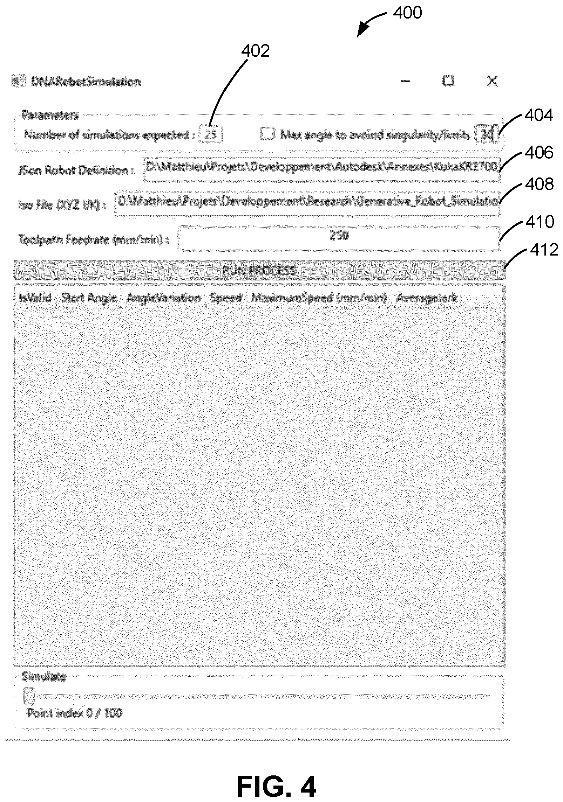

Returning to Figure 2, after the number of simulations 206 are performed and robotic problems are resolved where possible, the simulation application 130 displays results of the simulations to a user. Figures 4 illustrates an exemplar user interface 400 of the simulation application 130 of Figure 1, according to various embodiments. As shown, the user interface 400 is a graphical user interface (GUI) that includes text input fields 402, 404, 406, 408, and 410, via which a user can specify a number of expected simulations, a maximum angle to rotate a robot head when avoiding singularities and axis limits, a robot definition file, a file that includes a list of points of a toolpath, and a toolpath feed rate, respectively. The toolpath feed rate indicates the speed of movement of the tool of the robot, which can vary at different points. The toolpath feed rate can be specified in the file (e.g., an ISO file) that includes the list of points in some other embodiments. Although text input fields are shown for illustrative purposes, in other embodiments, the number of expected simulations, the maximum angle to rotate the robot head, the robot definition file, the file that includes the list of points, and/or the toolpath feed rate can be specified in any technically feasible manner via a user interface, or otherwise. After the user has entered the number of expected simulations, the maximum angle, etc. into the input fields 402, 404, 406, 408, and 410, the user can press a button 412 to initiate simulations of a robotic operation based on the specified number of simulations, maximum angle, etc.

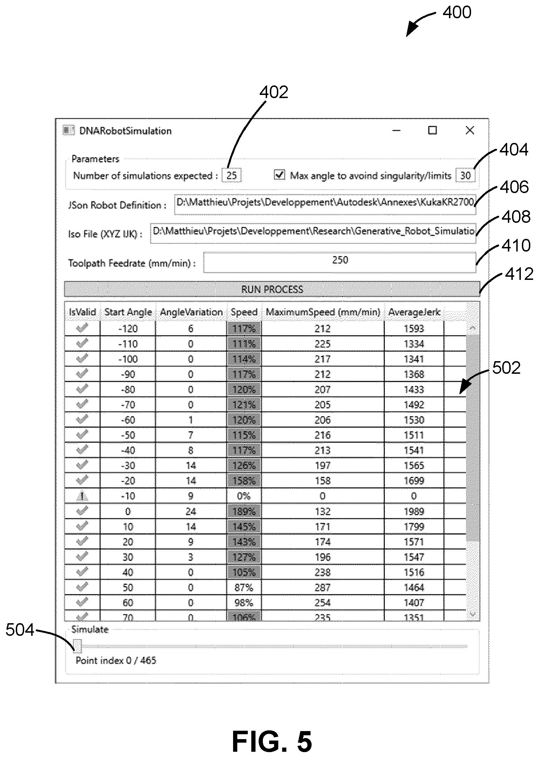

Figure 5 illustrates exemplar simulation results 502 displayed via the user interface 400, according to various embodiments. As shown, the simulation results 502 are displayed in a list of simulations, with columns indicating whether those simulations are valid or invalid due to unresolved robotic problems, a start angle of the simulations, an angle variation required to resolve a robotic problem at a point in time in the simulation, a highest speed of one of the robot axes as a percentage of a maximum achievable speed associated with that robot axis, a maximum speed of one of the robot axes, and an average jerk associated with the point in time in the simulation. The user interface 400 further permits the user to drag a slider 504 to other points in time in the simulation, and to play to the simulation (as well as other simulations), in order to see the angle variation, highest speed, etc. associated with different points in time.

As described, the highest speed is shown in the user interface 400 as a highest percentage of a maximum speed of one of the robot axes at a point in time. In some embodiments, the simulation application 130 calculates the speed of each axis, at various points, and compares the calculated speeds with the maximum achievable speeds of those axes to determine percentage values. The simulation application 130 then displays, via the user interface 400, the highest percentage value that is associated with one of the axes at a particular point (the least favorable point). The maximum achievable speed of each robot axis can generally depend on the robot and the operation being performed. For example, the maximum achievable speed could be different at different points along a toolpath that are associated with different materials being cut during a cutting operation. In some embodiments, the maximum achievable speed of the robot axes can be specified in the robot definition 202 for different points along the toolpath, or otherwise input into the simulation application 130. If the maximum achievable speed of one or more of the robot axes is exceeded by the speeds of those robot axes during the simulation, as indicated by the highest speed percentage being over 100 in the user interface 400, then a physical robot cannot perform the operation according to the simulation, because the physical robot cannot move the robot axes faster than the maximum achievable speeds for those axes. Instead, the physical robot will move the robot axes at up their maximum achievable speeds, which can result in suboptimal conditions for the operation being performed.

The jerk indicated by the user interface 400 is the derivative of acceleration, which is itself the derivative of the speed of the robot axes, and the jerk represents an instantaneous change in the acceleration. As a general matter, a smaller jerk that is associated with a smaller change in acceleration is smoother and preferrable to a larger jerk that is associated with a larger change in acceleration.

In some embodiments, a user interface (e.g., the user interface 400) further enables a user to set one or more filters that limit the displayed set of simulations to simulations that are best according to one or more criteria and/or that are valid and not associated with any unresolved robotic problems. For example, the user could set a filter to only display simulations in which a speed of the robot axes during those simulations does not exceed a maximum speed achievable by a physical robot. As another example, the user could set a filter to only display a given number (e.g., 5) of simulations with the least amount of jerk. As yet another example, the user could set a filter to only display simulations that are valid and not associated with any unresolved robotic problems.

After the simulation results (or a filtered subset thereof) are displayed to the user, the user can select one of those simulations (by, e.g., clicking on a simulation in the list 502 of simulations). For example, the user could select a simulation that is valid, does not require the maximum achievable speed of any robot axis to be exceeded, and is associated with the least amount of jerk. The simulation application 130 then generates robot code for controlling a physical robot based on the user-selected simulation. It should be understood that different types of robot code can be generated to control different types of robots. In addition, the robot code can be generated in any technically-feasible manner, including using well-known techniques, in some embodiments. For example, the simulation application 130 could use a post processor to convert a list of robot joints for every point in a list of points into robot code that is readable by a robot.

Returning to Figure 2, robot code 212 is generated by the simulation application 130 in response to user selection of a simulation. The robot code 212 can then be transmitted to a physical robot or a controller of the robot in order to cause the robot to move according to the simulation selected by the user.

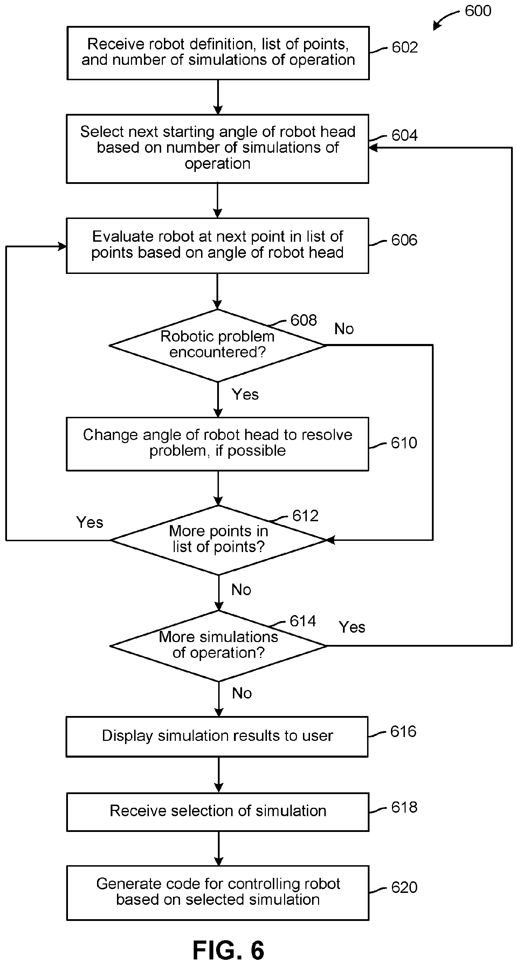

Figure 6 is a flow diagram of method steps for generating robot code based on one or more simulations of a robotic operation, according to various embodiments. Although the method steps are described with reference to the systems of Figures 1-2, persons skilled in the art will understand that any system configured to implement the method steps, in any order, falls within the scope of the present invention.

As shown, a method 600 begins at step 602, where the simulation application 130 receives a robot definition, a list of points, and a number of simulations of a robotic operation to perform. As described, the robot definition can define the geometry of a robot, the list of points can specify a toolpath that a head of the robot follows during the robotic operation, and the number of simulations can be specified by a user or other otherwise defined (e.g., the number of simulations could be a default number, a predefined number, or an automatically-determined number). The robot operation can be any technically-feasible operation, such as a milling operation, a painting operation, a gluing operation, a finishing operation, another manufacturing process, or any other robotic process.

At step 604, the simulation application 130 selects a starting angle of a head of the robot based on the number of simulations of the robotic operation. As described, in some embodiments, a range of allowable angles for the orientation of the robot head that are between axis limits can be divided by the number of simulations to determine an angle by which to increment the starting angle for each of simulation. In some other embodiments, the angle by which the starting value is incremented for each of the simulations can be a predefined angle.

At step 606, the simulation application 130 evaluates the robot at a point in the list of points based on the angle of the robot head. As described, in some embodiments, evaluating the robot can include using an inverse kinematics (IK) solver to compute joint positions of the robot given the head position at the point.

At step 608, the simulation application 130 determines whether a robotic problem is encountered. Examples of robotic problems include the exceeding of an axis limit by the robot that is evaluated at step 606, the creation of a singularity in which two or more axes of the robot evaluated at step 606 are collinearly aligned, or a collision between parts of the robot or between the robot and another object. For example, the simulation application 130 could check whether any joints of the robot are aligned with each other to determine whether a singularity has been created. As another example, the simulation application 130 could compare the joint positions of the robot with the robot definition 202 to determine if various axes are within corresponding axis limits or not. As yet another example, the simulation application 130 could detect collisions between parts of the robot and between the robot and other objects.

If a robotic problem is encountered, then the method 600 continues to step 610, where the simulation application 130 changes an angle of the robot head to resolve the problem, if possible. In some, other movements of a robot and/or other object(s) can be determined, in addition to or in lieu of the change to the angle of the robot head, to resolve robotic problems. For example, a rotary table that is external to the robot could be rotated about an axis by a smallest angle necessary to resolve a robotic problem. As another example, if the robot is mounted on a rail, then the robot could be moved by a smallest amount along the rail that resolves a robotic problem.

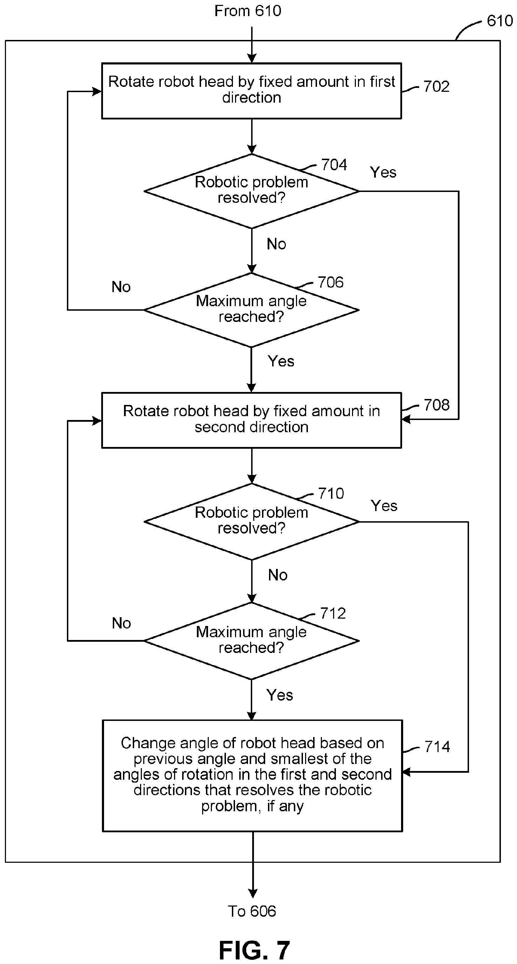

Figure 7 is a flow diagram of method steps for changing the angle of the robot head at step 610, according to various embodiments. Although the method steps are described with reference to the systems of Figures 1-2, persons skilled in the art will understand that any system configured to implement the method steps, in any order, falls within the scope of the present invention.

As shown, at step 702, the simulation application 130 rotates the robot head by a fixed amount in first direction. For example, the robot head could be rotated about the tool axis by one degree, or by any other fixed angle, at a time.

At step 704, the simulation application 130 determines whether the robotic problem has been resolved after the rotation at step 702. Resolving the robotic problem means that axis limit(s) are not exceeded and no singularities exist in which two or more robot axes are collinearly aligned.

If the robotic problem has not been resolved, then the method 600 continues to step 706, where the simulation application 130 determines whether a maximum angle has been reached. In some embodiments, the maximum angle is a user configurable angle beyond which no additional rotations of the robot head are made to avoid axis limits or singularities. In other embodiments, the maximum angle may be predefined or automatically determined.

If the maximum angle has not been reached, then the method 600 returns to step 702, where the simulation application 130 rotates the robot head again by the fixed amount in the first direction.

On the other hand, if the robotic problem has been resolved at step 704, or if the maximum angle is reached at step 706, then the method 600 continues to step 708, where the simulation application 130 rotates the robot head about the tool axis by a fixed amount in a second direction that is opposite to the first direction. For example, if the first direction is the clockwise direction, then the second direction would be the counter-clockwise direction, and vice versa. In some embodiments, the fixed amount that the robot head is rotated in the second direction is the same amount as the fixed amount that the robot head is rotated in the first direction at step 704.

At step 710, the simulation application 130 determines whether the robotic problem has been resolved. Step 710 is similar to step 704, described above.

If the robotic problem has not been resolved, then at step 712, the simulation application 130 determines whether a maximum angle has been reached. Step 712 is similar to step 706, described above, and the same maximum angle can be used in some embodiments.

If the maximum angle has not been reached, then the method 600 returns to step 708, where the simulation application 130 rotates the robot head again by the fixed amount in the second direction.

If the robotic problem has been resolved at step 710, or if the maximum angle is reached at step 712, then the method 600 continues to step 714, where the simulation application 130 changes the angle of the robot head based on the previous angle and a smallest of the angles of rotation in the first and second directions that solves the robotic problem, if any. Using the smallest angle minimizes the rotation, which can produce a smoother transition between points than a larger angle of rotation. In some embodiments, the angle of the robot head can be changed by setting the angle of the robot head to the previous angle plus the smallest of the angles that solves the robotic problem. If no smallest angle is identified because the maximum angle is reached in both directions of rotation, then the simulation application can display that the simulation is not valid via a user interface such as the user interface 400, described above in conjunction with Figure 5.

Returning to Figure 6, after the angle of the robot head is changed at step 610, or if the simulation application 130 determines that no robotic problem is encountered at step 608, then the method 600 continues to step 612, where the simulation application determines whether there are more points in the list of points. If there are more points in the list of points, then the method 600 returns to step 606, where the simulation application 130 evaluates the robot at a next point in the list of points based on the angle (which may be a changed angle) of the robot head.

If there are no more points in the list of points, then the method 600 continues to step 614. At step 614, if more simulations of the robot operation are to be performed, then the method 600 returns to step 604, where the simulation application 130 selects a next starting angle of the robot head based on the number of simulations of the robotic operation.

On the other hand, if no more simulations of the robotic operation are to be performed, then the method 600 continues to step 616, where the simulation application 130 displays the simulation results to user. In some embodiments, the simulation results can be displayed via a graphical user interface, such as the user interface 400 described above in conjunction with Figure 5. In some embodiments, the displayed results may be for a subset of simulations that are determined based on one or more filters. As described, filters can be applied to limit the displayed simulations to simulations that are the best according to one or more criteria and/or that are valid and not associated with any unresolved robotic problems. In some embodiments, the simulation application 130 can also display whether simulations are valid or encounter unresolved robotic problems, a start angle of the simulations, angle variations required to resolve a robotic problem at various point in time in the simulation, a highest speed of one of the robot axes as a percentage of a maximum achievable speed of that robot axis at various point in time in the simulation, a maximum speed of one of the robot axes at various point in time in the simulation, and/or an average jerk associated with various points in time in the simulation, as described above in conjunction with Figure 5.

At step 616, the simulation application 130 receives a selection of one of the simulations. In some embodiments, the same user interface that is used to display the simulation results also permits a user to select one of the simulations.

At step 618, the simulation application 130 generates code for controlling a robot based on the selected simulation. The code can be generated in any technically-feasible manner, including using well-known techniques, such as commercially available post processors. In some embodiments, different types of code can be generated to control different types of robots.

In sum, techniques are disclosed for controlling robots based on generated robot simulations. In the disclosed techniques, a robot simulation application is configured to receive a robot definition specifying the geometry of a robot, a list of points defining a toolpath that a head of the robot follows during an operation, and a number of simulations of the robot performing the operation. Given the robot definition, the list of points, and the number of simulations, the simulation application performs the number of simulations, displays results of those simulations, and generates code for controlling a physical robot based on a user selection of one of those simulations. During each simulation, if a robotic problem, such as an axis limit or a singularity problem, is encountered, then the simulation application attempts to resolve the problem by rotating the robot head in both directions about a tool axis and determining a smallest angle of rotation in either direction that resolves the robotic problem, if any.

At least one technical advantage of the disclosed techniques relative to the prior art is that the disclosed techniques, when incorporated into simulation software, enable the simulation software to generate and analyze multiple simulations of a robotic operation, without requiring a user to manually select parameter values for the different simulations using a trial-and-error process. In addition, the disclosed techniques enable the simulation software to automatically resolve problems, such as exceeding an axis limit or creating a singularity, that occur during the different simulations of the robotic operation. Further, the disclosed techniques account for the capabilities of the physical robot, such as the maximum speeds and accelerations that robot axes can achieve. Thus, with the disclosed techniques, the likelihood of optimizing robotic operations through simulation is increased relative to prior art approaches. These technical advantages represent tangible and meaningful technological improvements over conventional software and approaches for simulating robotic operations.
1. In some embodiments, a computer-implemented method for controlling a robot comprises performing a plurality of simulations of the robot performing at least one operation, wherein each simulation included in the plurality of simulations is associated with a value of a parameter that is different than values of the parameter associated with each other simulation included in the plurality of simulations, and subsequent to performing the plurality of simulations displaying one or more results of one or more of the plurality of simulations to a user, receiving, from the user, a selection of a first simulation included in the one or more simulations, and generating computer code for controlling the robot based on the first simulation.
2. The method of clause 1, wherein performing at least one simulation included in the plurality of simulations comprises resolving a robotic problem encountered during the at least one simulation.
3. The method of clauses 1 or 2, wherein resolving the robotic problem comprises rotating a head of the robot in at least two directions about an axis, *and* determining a smallest angle of rotation in either of the at least two directions that resolves the robotic problem.
4. The method of any of clauses 1-3, wherein the robotic problem relates to at least one of an axis limit of the robot being exceeded, a singularity being created, or a collision.
5. The method of any of clauses 1-4, wherein presenting the one or more results of the one or more simulations to the user comprises applying a filter to the one or more results and displaying a subset of the one or more results to the user.
6. The method of any of clauses 1-5, further comprising receiving a user selection of the filter that is applied to the one or more results.
7. The method of any of clauses 1-6, wherein the robot is specified via a robot definition, and, during the at least one operation, a head of the robot follows a toolpath that is specified by a list of points.
8. The method of any of clauses 1-7, further comprising, during each simulation included in the plurality of simulations computing a speed of at least one axis of the robot, and determining whether the speed of the at least one axis of the robot exceeds a maximum speed achievable by the at least one axis of the robot.
9. The method of any of clauses 1-8, further comprising computing at least one of an acceleration or a jerk of one or more axes of the robot during each of the plurality of simulations.
10. The method of any of clauses 1-9, further comprising transmitting the computer code to at least one of the robot or a controller of the robot.
11. In some embodiments, one or more non-transitory computer-readable storage media include instructions that, when executed by at least one processor, cause the at least one processor to performing steps for controlling a robot, the steps comprising performing a plurality of simulations of the robot performing at least one operation, wherein each simulation included in the plurality of simulations is associated with a value of a parameter that is different than values of the parameter associated with each other simulation included in the plurality of simulations, and subsequent to performing the plurality of simulations displaying one or more results of one or more of the plurality of simulations to a user, receiving, from the user, a selection of a first simulation included in the one or more simulations, and generating computer code for controlling the robot based on the first simulation.
12. The one or more non-transitory computer-readable storage media of clause 11, wherein performing at least one simulation included in the plurality of simulations comprises resolving a robotic problem encountered during the at least one simulation.
13. The one or more non-transitory computer-readable storage media of clauses 11 or 12, wherein resolving the robotic problem comprises rotating a head of the robot in at least two directions about an axis, and determining a smallest angle of rotation in either of the at least two directions that resolves the robotic problem.
14. The one or more non-transitory computer-readable storage media of any of clauses 11-13, wherein the robotic problem relates to at least one of an axis limit of the robot being exceeded, a singularity being created, or a collision.
15. The one or more non-transitory computer-readable storage media of any of clauses 11-14, wherein presenting the one or more results of the one or more simulations to the user comprises displaying the one or more results via a graphical user interface that permits the user to select the first simulation included in the one or more simulations.
16. The one or more non-transitory computer-readable storage media of any of clauses 11-15, wherein the instructions, when executed by at the least one processor, further cause the at least one processor to performing steps comprising computing a speed of at least one axis of the robot, and determining whether the speed of the at least one axis of the robot exceeds a maximum speed achievable by the at least one axis of the robot.
17. The one or more non-transitory computer-readable storage media of any of clauses 11-16, wherein the at least one operation comprises at least one of a milling operation, a painting operation, a gluing operation, a finishing operation, or another simulated robotic process.
18. The one or more non-transitory computer-readable storage media of any of clauses 11-17, wherein displaying the one or more results of the one or more of the plurality of simulations comprises displaying whether each simulation included in the one or more of the plurality of simulations is associated with any unresolved robotic problems.
19. In some embodiments, a system comprises one or more memories storing instructions, and one or more processors that are coupled to the one or more memories and, when executing the instructions, are configured to perform a plurality of simulations of a robot performing at least one operation, wherein each simulation included in the plurality of simulations is associated with a value of a parameter that is different than values of the parameter associated with each other simulation included in the plurality of simulations, and subsequent to performing the plurality of simulations display one or more results of one or more of the plurality of simulations to a user, receive, from the user, a selection of a first simulation included in the one or more simulations, and generate computer code for controlling the robot based on the first simulation.
20. The system of clause 19, further comprising the robot, and at least one controller of the robot, wherein the at least one controller is configured to control the robot based on the computer code.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for controlling a robot, the method comprising:
performing a plurality of simulations of the robot performing at least one operation, wherein each simulation included in the plurality of simulations is associated with a value of a parameter that is different than values of the parameter associated with each other simulation included in the plurality of simulations; and
subsequent to performing the plurality of simulations:
displaying one or more results of one or more of the plurality of simulations to a user,
receiving, from the user, a selection of a first simulation included in the one or more simulations, and
generating computer code for controlling the robot based on the first simulation.

2. The method of claim 1, wherein performing at least one simulation included in the plurality of simulations comprises resolving a robotic problem encountered during the at least one simulation.

3. The method of claim 2, wherein resolving the robotic problem comprises:
rotating a head of the robot in at least two directions about an axis; and
determining a smallest angle of rotation in either of the at least two directions that resolves the robotic problem.

4. The method of claim 2 or claim 3, wherein the robotic problem relates to at least one of an axis limit of the robot being exceeded, a singularity being created, or a collision.

5. The method of any of claims 1-4, wherein presenting the one or more results of the one or more simulations to the user comprises applying a filter to the one or more results and displaying a subset of the one or more results to the user.

6. The method of claim 5, further comprising receiving a user selection of the filter that is applied to the one or more results.

7. The method of any of claims 1-6, wherein the robot is specified via a robot definition, and, during the at least one operation, a head of the robot follows a toolpath that is specified by a list of points.

8. The method of any of claims 1-7, further comprising, during each simulation included in the plurality of simulations:
computing a speed of at least one axis of the robot; and
determining whether the speed of the at least one axis of the robot exceeds a maximum speed achievable by the at least one axis of the robot.

9. The method of any of claims 1-8, further comprising computing at least one of an acceleration or a jerk of one or more axes of the robot during each of the plurality of simulations.

10. The method of any of claims 1-9, further comprising transmitting the computer code to at least one of the robot or a controller of the robot.

11. One or more non-transitory computer-readable storage media including instructions that, when executed by at least one processor, cause the at least one processor to performing the method for controlling a robot as claimed in any of claim 1-10.

12. A system comprising:
one or more memories storing instructions; and
one or more processors that are coupled to the one or more memories and, when executing the instructions, are configured to perform the method of any of claims 1-10.

13. The system of claim 12, further comprising:
the robot; and
at least one controller of the robot, wherein the at least one controller is configured to control the robot based on the computer code.
